# EUROPEAN PATENT APPLICATION

(11) **EP 4 722 671 A1**
(43) Date of publication of application: **08.04.2026**
(21) Application number: 25205704.7
(22) Date of filing: 30.09.2025
(51) Int. Cl.: G01K 1/024

(54) **TEMPERATURE SENSING DEVICES AND WIRELESS COMMUNICATION IMPROVEMENTS FOR COOKING APPLIANCES**

(30) Priority: 04.10.2024 US 202463703714 P; 10.12.2024 US 202463730225 P; 12.09.2025 US 202519327621
(71) Applicant: Apption Labs Ltd., Leicester, LE2 7SR (GB)
(72) Inventor: Coleman, Farrell, Leicester, LE3 3RX (GB); Callaghan, David, Sutton Bonington, DE74 2GW (GB); Yeh, Ming-Hao, Leicester, LE2 6JQ (GB)
(74) Representative: Grünecker Patent- und Rechtsanwälte PartG mbB

(57) **Abstract**

A temperature sensing device includes a first transceiver device configured to operate at a first operating frequency and a second transceiver device configured to operate at a second operating frequency that is different from the first operating frequency. The temperature sensing device may also include one or more processors and a non-transitory computer-readable medium storing instructions thereon that, when executed by the one or more processors, cause the one or more processors to detect a received signal strength indicator (RSSI) indicative of a strength of a wireless connection between the one or more wireless transceiver devices and a device remote from the temperature sensing device, and switch between the first transceiver device and the second transceiver device responsive to the RSSI exceeding a pre-determined threshold.

## Description

### PRIORITY CLAIM

This application claims the benefit of the filing date of United States Provisional Patent Application Serial No. 63/703,714, filed October 4, 2024, for "TEMPERATURE SENSING DEVICES AND WIRELESS COMMUNICATION IMPROVEMENTS FOR COOKING APPLIANCES," and of United States Provisional Patent Application Serial No. 63/730,225, filed December 10, 2024, for "TEMPERATURE SENSING DEVICES AND WIRELESS COMMUNICATION IMPROVEMENTS FOR COOKING APPLIANCES," the disclosure of each of which is hereby incorporated herein in its entirety by this reference.

### BACKGROUND

Wireless food thermometers have recently been developed to provide information to a remote device, such as a smartphone, remote station, or tablet. Examples of such wireless food thermometers are provided in U.S. Patent No. 10,024,736, entitled "FOOD THERMOMETER AND METHOD OF USING THEREOF," and filed on June 24, 2016, the contents of which are hereby incorporated by reference in their entirety. The information provided to the remote device or devices may include, for example, a cooking temperature of food being cooked, an estimated time until the food has been cooked to a preferred doneness, or cooking instructions such as when to adjust a cooking temperature.

Unfortunately, most cooking appliances, such as barbeques, smokers, ovens, and grills can act as a Faraday cage or at least attenuate the wireless signal transmitted by a wireless food thermometer or another wireless device inside the cooking appliance. In addition, there is a need for more accurate measurement of the ambient temperature inside a cooking chamber of the cooking appliance.

### DISCLOSURE

The embodiments of the present disclosure are directed at a wireless temperature sensing device (also referred to herein as wireless device) and method of the wireless device. The wireless device includes a first wireless transceiver device configured to operate at a first operating frequency and a second wireless transceiver device configured to operate at a second operating frequency that is different from the first operating frequency. The wireless device may also include one or more processors and a non-transitory computer-readable medium storing instructions thereon that, when executed by the one or more processors, cause the one or more processors to detect a received signal strength indicator (RSSI) indicative of a strength of a wireless connection between the one or more wireless transceiver devices and a device remote from the wireless device. Based on the RSSI, the wireless device may be configured to use one or more of the one or more wireless transceivers. For example, when the RSSI while using the first wireless transceiver falls below a predetermined threshold, the wireless device may be configured to switch to using the second wireless transceiver. When the RSSI reaches or exceeds the predetermined threshold, the wireless device may be configured switch from using the second wireless transceiver to using the first wireless transceiver.

In one embodiment of the disclosure, a temperature sensing device for use with a cooking appliance includes a first transceiver device configured to operate at a first operating frequency and a second transceiver device configured to operate at a second operating frequency that is different from the first operating frequency. The temperature sensing device includes one or more processors and a non-transitory computer-readable medium storing instructions thereon, The instructions, when executed by the one or more processes, cause the processors to transmit data using the first transceiver device, detect a received signal strength indicator (RSSI) indicative of a strength of a wireless connection between the first transceiver device and a device remote from the first transceiver device, and begin transmitting data using the second transceiver device responsive to the RSSI crossing a pre-determined threshold.

In another embodiment of the disclosure, a temperature sensing system includes a wireless device configured to determine temperature data. The temperature sensing system includes a first transceiver device coupled with the wireless device, the first transceiver device configured to transmit temperature data from the wireless device at a first operating frequency and a second transceiver device coupled with the wireless device, the second transceiver device configured to transmit temperature data from the wireless device at a second operating frequency that is different from the first operating frequency. The temperature sensing system includes a remote device located remote from the wireless device, the remote device configured to receive temperature data from both the first transceiver device and the second transceiver device and to provide instructions to the wireless device. The temperature sensing system includes a controller coupled with the first transceiver device and the second transceiver device, the controller configured to selectively cause the first transceiver device and the second transceiver device to send temperature data to the remote device based on a determination of a received signal strength indicator (RSSI) of a connection between the wireless device and the remote device.

In yet another embodiment of the disclosure, a method of sending temperature data includes determining temperature data with a wireless device. The method includes sending, to a remote device, the temperature data with a first transceiver device coupled with the wireless device. The method includes detecting a received signal strength indicator (RSSI) indicative of a strength of a wireless connection between the first transceiver device and the remote device. The method may include determining the RSSI is below a predetermined threshold and sending, to the remote device, the temperature data with a second transceiver device coupled with the wireless device, the second transceiver device transmitting at a different frequency than the first transceiver device.

### BRIEF DESCRIPTION OF THE DRAWINGS

The features and advantages of the embodiments of the present disclosure will become more apparent from the detailed description set forth below when taken in conjunction with the drawings. The drawings and the associated descriptions are provided to illustrate embodiments of the disclosure and not to limit the scope of the claims.
FIG. 1 illustrates an example of a wireless device inside a cooking appliance and a remote device outside of the cooking appliance for receiving a wireless signal from the wireless device.
FIG. 2 illustrates a block diagram of a wireless device in accordance with one or more embodiments of the present disclosure.
FIG. 3 is a flow chart illustrating one or more operations of the temperature sensing device according to one or more embodiments of the present disclosure.
FIG. 4 is a block diagram of circuitry that, in some examples, may be used to implement various functions, operations, acts, processes, and/or methods disclosed herein.

### MODE(S) FOR CARRYING OUT THE INVENTION

In the following detailed description, numerous specific details are set forth to provide a full understanding of the present disclosure. It will be apparent, however, to one of ordinary skill in the art that the various embodiments disclosed may be practiced without some of these specific details. In other instances, well-known structures and techniques have not been shown in detail to avoid unnecessarily obscuring the various embodiments.

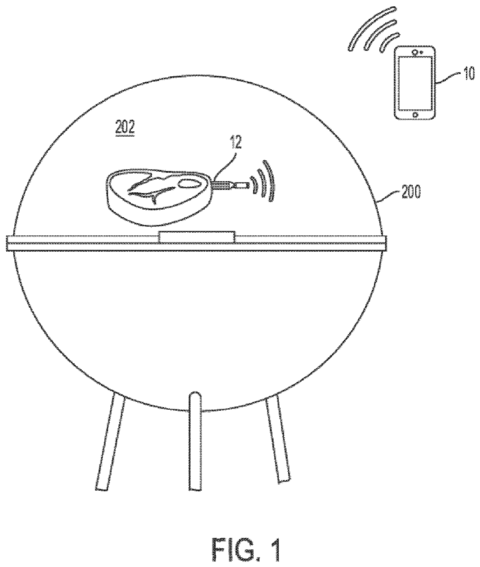

FIG. 1 illustrates an example of wireless device 12 inside cooking appliance 200 and remote device 10 outside of cooking appliance 200 for receiving a wireless signal from wireless device 12 inside cooking chamber 202 of cooking appliance 200. In some implementations, wireless device 12 can include a wireless food thermometer, such as a wireless meat thermometer. The wireless device 12 may be a rapid response thermometer. The wireless food thermometer may generally be as described in U.S. Patent No. 11,723,489, but further including a wireless communication system that selectively employs at least two wireless operational frequencies. As shown in FIG. 1, wireless device 12 transmits a wireless signal for reception by remote device 10 outside of cooking appliance 200. In some implementations, the wireless signal can include a Radio Frequency (RF) signal such as, for example, a BLUETOOTH^{®} signal, or other wireless communication signal. Remote device 10 can include, for example, a smartphone, a laptop, a tablet, a smart watch, a desktop computer, or user interface for wireless device 12. In some implementations, remote device 10 can include a gateway device, such as a BLUETOOTH^{®} to Wi-Fi bridge, which may or may not include a user interface.

In some embodiments, the wireless device 12 may include more than one receiver, transmitter, or transceiver. For example, the wireless device 12 may include a first antenna, receiver, transmitter, or transceiver configured to perform wireless communications according to a BLUETOOTH^{®} protocol (typically operating at a frequency range from about 2.400 GHz to about 2.49 GHz). The wireless device 12 may also include a second antenna, receiver, transmitter, or transceiver configured to operate at sub-1 GHz frequency bands (e.g., from about 280 MHz to about 999 MHz). As a specific, non-limiting example, the second antenna, receiver, transmitter, or transceiver may operate at about 869.7 MHz or about 917 MHz. In an embodiment, the wireless device 12 includes a single dual band antenna. The single dual band antenna may be configured to perform wireless communications according to a BLUETOOTH^{®} protocol (typically operating at a frequency range from about 2.400 GHz to about 2.49 GHz) and may also be configured to operate at sub-1 GHz frequency bands (e.g., from about 280 MHz to about 999 MHz).

The wireless device 12 may switch between using the first and second antenna, receiver, transmitter, or transceiver to maintain a wireless connection with a device such as the remote device 10. For example, the wireless device 12 may detect a received signal strength indicator (RSSI) from either the first or second antenna (or a single dual-band antenna), receiver, transmitter, or transceiver and, based on the detected RSSI, switch between the first and second receiver, transmitter, or transceiver, such as in response to the detected RSSI reaching or crossing (e.g., exceeding or falling below) a pre-determined threshold. The RSSI may be determined for a first frequency or may be determined for a second frequency. As a specific, non-limiting example, the first antenna, receiver, transmitter, or transceiver may be in the form of a BLUETOOTH^{®} transceiver and the second antenna, receiver, transmitter, or transceiver may be in the form of a sub-GHz transceiver. The wireless device 12 may, by default, provide data to and receive data from the BLUETOOTH^{®} transceiver and receive an RSSI of the BLUETOOTH^{®} transceiver. The RSSI may be indicative of a signal strength between the BLUETOOTH^{®} transceiver and the remote device 10. If the RSSI falls below a pre-determined threshold, the wireless device 12 may switch from performing wireless communication with the remote device 10 via the BLUETOOTH^{®} transceiver and begin wireless communication with the remote device 10 via the sub-GHz transceiver to maintain a wireless connection between the wireless device 12 and the remote device 10. Furthermore, while using the sub-GHz transceiver, the wireless device 12 may detect that the RSSI between the BLUETOOTH^{®} transceiver and the portable electronic device is at or above a pre-determined threshold and may then switch to using the BLUETOOTH^{®} transceiver. In some embodiments, the first and second antenna, receiver, transmitter, or transceiver may be a single device that is configured to perform wireless communications using a BLUETOOTH^{®} protocol and sub-GHz frequencies.

Sub-GHz devices typically offer greater range than BLUETOOTH^{®} devices but may also typically use more power than BLUETOOTH^{®} devices. By including a BLUETOOTH^{®} device and a sub-GHz device and automatically switching between the BLUETOOTH^{®} device and the sub-GHz device based on a signal strength between the devices and the remote device 10, a connection may be maintained between the wireless device 12 (e.g., food thermometer) and the remote device 10 at greater distances compared to using only a BLUETOOTH^{®} device and may, when the remote device 10 is within a close proximity to the wireless device 12, allow the wireless device 12 to communicate using less power compared to using only a sub-GHz device.

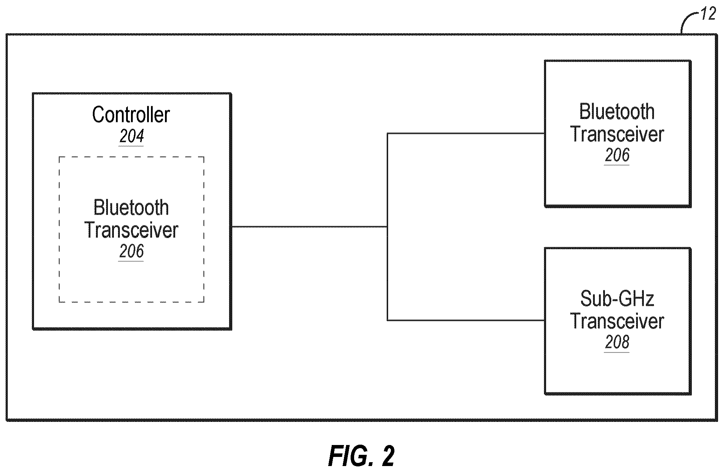

FIG. 2 is a block diagram of the wireless device 12 according to one or more embodiments of the present disclosure. The wireless device 12 may include a controller 204, a BLUETOOTH^{®} transceiver 206, and a sub-GHz transceiver 208. In an embodiment, the BLUETOOTH^{®} transceiver 206 is integral with the controller 204 as indicated by dashed box 206. The controller 204 is in communication with the BLUETOOTH^{®} transceiver 206 and the sub-GHz transceiver 208. The controller 204 may selectively cause the BLUETOOTH^{®} transceiver 206 and/or the sub-GHz transceiver 208 to send data (e.g., temperature data). For example, the controller 204 may cause the BLUETOOTH^{®} transceiver 206 to send data when a detected RSSI of a connection between the wireless device 12 and the remote device 10 is above a pre-determined threshold. The controller 204 may then cause the BLUETOOTH^{®} transceiver 206 to cease transmitting data and cause the sub-GHz transceiver 208 to transmit data responsive to a determination that the RSSI of a connection between the wireless device 12 and the remote device 10 is below a pre-determined threshold.

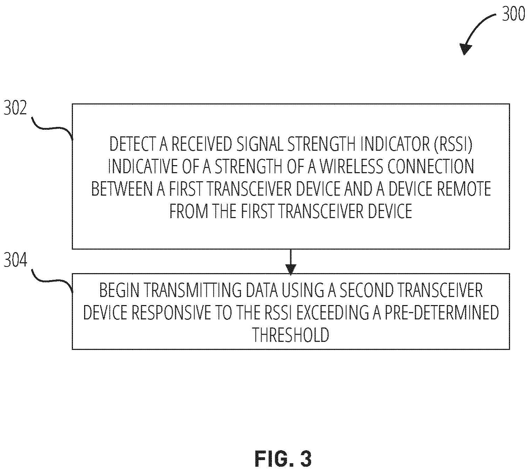

FIG. 3 is a flowchart 300 illustrating an operation of the wireless device 12 of FIG. 1 according to one or more embodiments of the present disclosure. At operation 302, the wireless device 12 detects a received signal strength indicator (RSSI) indicative of the strength of a wireless connection between a first transceiver device and a device remote from a temperature sensing device (e.g., wireless device 12). At operation 304, the wireless device begins transmitting data using a second transceiver device responsive to the RSSI exceeding a pre-determined threshold.

In some embodiments, when wireless device 12 is powered on (e.g., initially powered on for the first time), a sub-GHz transceiver 208 of the wireless device 12 may be disabled or in a disabled state by default. The remote device 10 may provide one or more instructions to the wireless device 12 to set or change one or more operating parameters of the wireless device 12. For example, the remote device 10 may, via an application executed on the remote device 10, facilitate a wireless connection with the wireless device 12 (e.g., via a BLUETOOTH^{®} transceiver 206 or other receiver device of the wireless device 12).

The application may be configured to its location (e.g., global position) using location services of the remote device 10 (e.g., a global positioning service (GPS)) and, based on the location, provide instructions to the wireless device 12 to cause the sub-GHz transceiver 208 of the wireless device 12 to operate at a given frequency. For example, the application may be configured to set an operating frequency of the sub-GHz transceiver 208 based on International Telecommunication Union (ITU) frequency standards. Different regions of the globe may each be associated with a different ITU frequency standard. Accordingly, the application of the remote device 10 may determine which global region corresponds with the location of the remote device 10 and, based on the determined location and associated region, cause the sub-GHz transceiver 208 of the wireless device 12 to operate at an operating frequency associated with that region. For example, for three different defined ITU regions, if the application determines that the remote device 10 is within the first ITU region, the application may set, via the BLUETOOTH^{®} transceiver 206, the operating frequency of the sub-GHz transceiver 208 of the wireless device 12 to operate in the band of about 868 MHz to about 870 MHz. Additionally, the application may set the sub-GHz transceiver 208 to operate at a frequency in the band of about 915 MHz to about 917 MHz responsive to a determination that the remote device 10 is within the second or third ITU regions. Once the operating frequency of the sub-GHz transceiver 208 of the wireless device 12 is set, the wireless device 12 may then transmit temperature information to the remote device 10 via the sub-GHz transceiver 208.

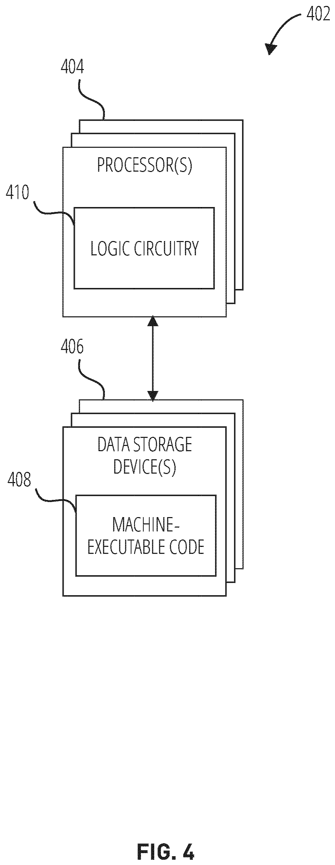

It will be appreciated by those of ordinary skill in the art that functional elements of examples disclosed herein (e.g., functions, operations, acts, processes, and/or methods) may be implemented in any suitable hardware, software, firmware, or combinations thereof. FIG. 4 illustrates non-limiting examples of implementations of functional elements disclosed herein. In some examples, some or all portions of the functional elements disclosed herein may be performed by hardware specially configured for carrying out the functional elements.

FIG. 4 is a block diagram of circuitry 402 that, in some examples, may be used to implement various functions, operations, acts, processes, and/or methods disclosed herein. The circuitry 402 includes one or more processors 404 (sometimes referred to herein as "processors 404") operably coupled to one or more data storage devices (sometimes referred to herein as "storage 406"). The storage includes machine-executable code 408 stored thereon and the processors 404 include logic circuitry 410. The machine-executable code 408 includes information describing functional elements that may be implemented by (e.g., performed by) the logic circuitry 410. The logic circuitry 410 is adapted to implement (e.g., perform) the functional elements described by the machine-executable code 408. The circuitry 402, when executing the functional elements described by the machine-executable code 408, should be considered as special purpose hardware configured for carrying out functional elements disclosed herein. In some examples, the processors 404 may perform the functional elements described by the machine-executable code 408 sequentially, concurrently (e.g., on one or more different hardware platforms), or in one or more parallel process streams.

When implemented by logic circuitry 410 of the processors 404, the machine-executable code 408 is to adapt the processors 404 to perform operations of examples disclosed herein. For example, the machine-executable code 408 may adapt the processors 404 to perform at least a portion or a totality of the flowchart 300 of FIG. 3.

The processors 404 may include a general purpose processor, a special purpose processor, a central processing unit (CPU), a microcontroller, a programmable logic controller (PLC), a digital signal processor (DSP), an application specific integrated circuit (ASIC), a field-programmable gate array (FPGA) or other programmable logic device, discrete gate or transistor logic, discrete hardware components, other programmable device, or any combination thereof designed to perform the functions disclosed herein. A general-purpose computer including a processor is considered a special-purpose computer while the general-purpose computer executes functional elements corresponding to the machine-executable code 408 (e.g., software code, firmware code, hardware descriptions) related to examples of the present disclosure. It is noted that a general-purpose processor (may also be referred to herein as a host processor or simply a host) may be a microprocessor, but in the alternative, the processors 404 may include any conventional processor, controller, microcontroller, or state machine. The processors 404 may also be implemented as a combination of computing devices, such as a combination of a DSP and a microprocessor, a plurality of microprocessors, one or more microprocessors in conjunction with a DSP core, or any other such configuration.

In some examples, the storage 406 includes volatile data storage (e.g., random-access memory (RAM)), non-volatile data storage (e.g., Flash memory, a hard disc drive, a solid-state drive, erasable programmable read-only memory (EPROM), etc.). In some examples, the processors 404 and the storage 406 may be implemented into a single device (e.g., a semiconductor device product, a system on chip (SOC), etc.). In some examples, the processors 404 and the storage 406 may be implemented into separate devices.

In some examples, the machine-executable code 408 may include computer-readable instructions (e.g., software code, firmware code). By way of non-limiting example, the computer-readable instructions may be stored by the storage 406, accessed directly by the processors 404, and executed by the processors 404 using at least the logic circuitry 410. Also, by way of non-limiting example, the computer-readable instructions may be stored on the storage 406, transferred to a memory device (not shown) for execution, and executed by the processors 404 using at least the logic circuitry 410. Accordingly, in some examples, the logic circuitry 410 includes electrically configurable logic circuitry 410.

In some examples, the machine-executable code 408 may describe hardware (e.g., circuitry) to be implemented in the logic circuitry 410 to perform the functional elements. This hardware may be described at any of a variety of levels of abstraction, from low-level transistor layouts to high-level description languages. At a high level of abstraction, a hardware description language (HDL) such as an IEEE Standard hardware description language (HDL) may be used. By way of non-limiting examples, VERILOG^{™}, SYSTEMVERILOG^{™} or very large-scale integration (VLSI) hardware description language (VHDL^{™}) may be used.

HDL descriptions may be converted into descriptions at any of numerous other levels of abstraction as desired. As a non-limiting example, a high-level description may be converted to a logic-level description such as a register-transfer language (RTL), a gate-level (GL) description, a layout-level description, or a mask-level description. As a non-limiting example, micro-operations to be performed by hardware logic circuits (e.g., gates, flip-flops, registers, without limitation) of the logic circuitry 410 may be described in a RTL and then converted by a synthesis tool into a GL description, and the GL description may be converted by a placement and routing tool into a layout-level description that corresponds to a physical layout of an integrated circuit of a programmable logic device, discrete gate or transistor logic, discrete hardware components, or combinations thereof. Accordingly, in some examples, the machine-executable code 408 may include an HDL, an RTL, a GL description, a mask level description, other hardware description, or any combination thereof.

In examples where the machine-executable code 408 includes a hardware description (at any level of abstraction), a system (not shown but including the storage 406) may implement the hardware description described by the machine-executable code 408. By way of non-limiting example, the processors 404 may include a programmable logic device (e.g., an FPGA or a PLC) and the logic circuitry 410 may be electrically controlled to implement circuitry corresponding to the hardware description into the logic circuitry 410. Also, by way of non-limiting example, the logic circuitry 410 may include hard-wired logic manufactured by a manufacturing system (not shown but including the storage 406) according to the hardware description of the machine-executable code 408.

Regardless of whether the machine-executable code 408 includes computer-readable instructions or a hardware description, the logic circuitry 410 is adapted to perform the functional elements described by the machine-executable code 408 when implementing the functional elements of the machine-executable code 408. It is noted that although a hardware description may not directly describe functional elements, a hardware description indirectly describes functional elements that the hardware elements described by the hardware description are capable of performing.

The illustrations presented herein are not actual views of any system, device, or structure, or any component thereof, but are merely idealized representations, which are employed to describe embodiments of the present invention.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, any relational term, such as "first," "second," "top," "bottom," "upper," "lower," "above," "beneath," "side," "upward," "downward," etc., is used for clarity and convenience in understanding the disclosure and accompanying drawings, and does not connote or depend on any specific preference or order, except where the context clearly indicates otherwise. For example, these terms may refer to an orientation of elements of any system, device, or structure, when utilized in a conventional manner. Furthermore, these terms may refer to an orientation of elements of any system, device, or structure, as illustrated in the drawings.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some examples, the different components, modules, engines, and services described in the present disclosure may be implemented as objects or processes that execute on the computing system (e.g., as separate threads). While some of the systems and methods described in the present disclosure are generally described as being implemented in software (stored on and/or executed by general purpose hardware), specific hardware implementations or a combination of software and specific hardware implementations are also possible and contemplated.

As used in the present disclosure, the term "combination" with reference to a plurality of elements may include a combination of all the elements or any of various different subcombinations of some of the elements. For example, the phrase "A, B, C, D, or combinations thereof" may refer to any one of A, B, C, or D; the combination of each of A, B, C, and D; and any sub-combination of A, B, C, or D such as A, B, and C; A, B, and D; A, C, and D; B, C, and D; A and B; A and C; A and D; B and C; B and D; or C and D.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to examples containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

While the present disclosure has been described herein with respect to certain illustrated examples, those of ordinary skill in the art will recognize and appreciate that the present invention is not so limited. Rather, many additions, deletions, and modifications to the illustrated and described examples may be made without departing from the scope of the invention as hereinafter claimed along with their legal equivalents. In addition, features from one example may be combined with features of another example while still being encompassed within the scope of the invention as contemplated by the inventor.

## Claims

1. A temperature sensing device for use with a cooking appliance, the temperature sensing device comprising:
a first transceiver device configured to operate at a first operating frequency;
a second transceiver device configured to operate at a second operating frequency that is different from the first operating frequency;
one or more processors; and
a non-transitory computer-readable medium storing instructions thereon that, when executed by the one or more processors, cause the one or more processors to:
transmit data using the first transceiver device;
detect a received signal strength indicator (RSSI) of the first operating frequency indicative of a strength of a wireless connection between the first transceiver device and a device remote from the first transceiver device; and
begin transmitting data using the second transceiver device responsive to the RSSI of the first operating frequency crossing a pre-determined threshold.

2. The temperature sensing device of claim 1, wherein the first transceiver device is configured to operate within an operating frequency range from about 2.4 GHz to about 2.5 GHz and the second transceiver device is configured to operate within an operating frequency range from about 280 MHz to about 999 MHz.

3. The temperature sensing device of claim 1 or 2, wherein the non-transitory computer-readable medium stores instructions that, when executed by the one or more processors, cause the one or more processors to:
transmit temperature data to the device remote from the temperature sensing device using the first transceiver device;
receive an RSSI of the first operating frequency indicative of a signal strength of a signal between the first transceiver device and the device remote from the temperature sensing device; and
cease transmitting the temperature data using the first transceiver device and begin transmitting the temperature data using the second transceiver device responsive to a determination that the RSSI of the first operating frequency falls below a pre-determined threshold.

4. The temperature sensing device of any one of claims 1 to 3, wherein the non-transitory computer-readable medium stores instructions that, when executed by the one or more processors, cause the one or more processors to:
cease transmitting the temperature data using the second transceiver device and begin retransmitting the temperature data using the first transceiver device responsive to a determination that the RSSI of the second operating frequency exceeds the pre-determined threshold.

5. The temperature sensing device of any one of claims 1 to 4, wherein the RSSI of the first operating frequency crosses the pre-determined threshold when the RSSI of the first operating frequency falls below the pre-determined threshold.

6. The temperature sensing device of any one of claims 1 to 5, wherein one or more of the first transceiver device and the second transceiver device are configured to receive location data from the device remote from the first transceiver device.

7. The temperature sensing device of claim 6, wherein the non-transitory computer-readable medium stores instructions that, when executed by the one or more processors, cause the one or more processors to:
cause the second transceiver device to operate at a given frequency based on the received location data.

8. The temperature sensing device of any one of claims 1 to 7, wherein the first transceiver device receives an application from the device remote from the first transceiver device.

9. The temperature sensing device of claim 8, wherein the received application sets, via the first transceiver device, an operation frequency of the second transceiver device.

10. The temperature sensing device of claim 9, wherein the received application sets the operation frequency of the second transceiver device based on a location of the device remote from the first transceiver device.

11. A temperature sensing system comprising:
a wireless device configured to determine temperature data;
a first transceiver device coupled with the wireless device, the first transceiver device configured to transmit temperature data from the wireless device at a first operating frequency;
a second transceiver device coupled with the wireless device, the second transceiver device configured to transmit temperature data from the wireless device at a second operating frequency that is different from the first operating frequency;
a remote device located remote from the wireless device, the remote device configured to receive temperature data from both the first transceiver device and the second transceiver device and to provide instructions to the wireless device; and
a controller coupled with the first transceiver device and the second transceiver device, the controller configured to selectively cause the first transceiver device and the second transceiver device to send temperature data to the remote device based on a determination of a received signal strength indicator (RSSI) of a connection between the wireless device and the remote device.

12. The temperature sensing system of claim 11, wherein the controller causes the first transceiver device to send temperature data to the remote device when the RSSI is at or exceeds a predetermined threshold.

13. The temperature sensing system of claim 12, wherein the controller causes the second transceiver device to send temperature data to the remote device when the RSSI falls below the predetermined threshold.

14. The temperature sensing system of any one of claims 11 to 13, wherein the second transceiver device is in a disabled state by default.

15. A method of sending temperature data, the method comprising:
determining temperature data with a wireless device;
sending, to a remote device, the temperature data with a first transceiver device coupled with the wireless device; and
detecting a received signal strength indicator (RSSI) indicative of a strength of a wireless connection between the first transceiver device and the remote device.
